**Europäisches Patentamt**

**European Patent Office**

**Office européen des brevets**

(19)

(11) Numéro de publication: **0 110 784**
A1

# DEMANDE DE BREVET EUROPEEN

(21) Numéro de dépôt: **83402274.1**

(22) Date de dépôt: **24.11.83**

(51) Int. Cl.³: **F 16 L 41/04, F 16 L 47/00**

(30) Priorité: **25.11.82 FR 8219813**

(43) Date de publication de la demande: **13.06.84**
**Bulletin 84/24**

(84) Etats contractants désignés: **AT BE CH DE GB IT LI LU NL SE**

(71) Demandeur: **FONDERIE DE CUIVRE ET ROBINETTERIE DU CENTRE, Sainte-Lizaigne, F-36260 Reuilly (FR)**

(72) Inventeur: **Murias, Lionel, 64, Avenue de la Vallée, F-36100 Issoudun (FR)**
Inventeur: **Blin, Claude, 22, rue de la Nation, F-36100 Issoudun (FR)**

(74) Mandataire: **Du Chaffaut, François et al, c/o Cabinet Harlé & Phélip 21, rue de la Rochefoucauld, F-75009 Paris (FR)**

(54) **Procédé et dispositif de branchement d'une dérivation.**

(57) L'invention est relative à un procédé et un dispositif pour le branchement «vertical» d'une dérivation sur une conduite en charge.

Selon l'invention, après le perçage de la conduite (1) à travers un canal (11) prévu dans le boisseau du robinet (4), on recule partiellement l'outil de perçage (2) et on empêche le fluide de s'écouler à l'aide de moyens auxiliaires d'étanchéité (17) qui sont disposés de façon à permettre la mise en place des moyens définitifs d'obturation du canal (11), par exemple un bouchon vissé (22), sans que celui-ci soit soumis à la pression du fluide pendant leur montage. Cette mise en place est ainsi rendue plus facile.

1

"PROCEDE ET DISPOSITIF DE BRANCHEMENT D'UNE DERIVATION".

La présente invention concerne un procédé de branchement d'une dérivation sur une conduite en charge et un dispositif spécialement conçu pour la mise en oeuvre de ce procédé.

Elle concerne plus particulièrement le branchement de dérivations avec départ horizontal, sur des conduites souterraines d'adduction d'eau, ces branchements étant effectués sans perturbations de l'écoulement ni de la distribution.

Deux procédés sont utilisés selon la position de la dérivation. Si l'axe de celle-ci pénètre dans la conduite et rencontre l'axe de cette dernière ou va passer à proximité, on a un branchement dit "horizontal". Si, au contraire, l'axe de la dérivation ne rencontre pas la conduite, le raccordement comporte, en général, un angle droit, et le branchement est dit "vertical".

Le procédé horizontal classique simple consiste à fixer de façon étanche sur la conduite un robinet du genre vanne sur lequel vient s'adapter le dispositif étanche de perçage. Ce dispositif comporte un outil de perçage, foret par exemple, actionné de l'extérieur qui traverse toute la vanne pour percer la conduite. Le perçage étant effectué, le foret est dégagé avant de refermer la vanne ; le dispositif de perçage peut alors être démonté pour adapter, sur la vanne, la conduite de dérivation. L'inconvénient majeur de ce procédé est d'opérer avec des robinets-vannes dont l'axe de passage est horizontal, donc difficile d'accès dans le fond d'une fouille ou impossible en cas de présence d'autres conduites ou câbleries diverses.

Les procédés de branchements verticaux sont donc, de préférence, utilisés lorsqu'on ne dispose pas d'une fouille suffisamment large ni d'une tranchée perpendiculaire à la conduite pour le passage et la manipulation de l'appareil de perçage, et l'invention concerne un procédé de ce type.

Un procédé vertical connu consiste à monter, sur la conduite, un robinet à tournant du type "quart de tour" qui est commandé de la surface de la fouille par une tige. Pour pouvoir percer la conduite, il est nécessaire d'enlever les parties tournantes du robinet ou tout au moins de prévoir un orifice ou un canal pour le passage du foret. Ce canal est obturé à sa partie supérieure par une vanne provisoire montée sur le robinet afin de pouvoir réaliser l'opération de perçage comme décrit précédemment. Cependant, dans ce procédé, l'opération de perçage est suivie d'une opération, dans l'enceinte du robinet sous pression, qui consiste à remonter les parties tournantes du robinet ou à obturer de façon définitive la partie supérieure du canal.

L'inconvénient de ce procédé réside essentiellement dans cette opération d'obturation définitive qui est réalisée de façon aveugle dans l'enceinte sous pression du robinet à l'aide d'un dispositif manipulateur étanche que l'on commande de l'extérieur. Ces opérations de remontage du robinet sont rendues encore plus délicates du fait, parfois, de la présence de copeaux de perçage qui n'ont pas été évacués malgré la purge du dispositif de perçage pendant ou après le perçage.

Le procédé selon l'invention, a pour but de s'affranchir de cette opération aveugle de remontage dans ce cas particulier d'un branchement d'une dérivation sur le dessus d'une conduite au moyen d'un robinet du type à tournant ou à soupape à axe de commande vertical. Il a également pour but d'éliminer les difficultés dues à la présence de copeaux et surtout de rendre plus rapide et plus sûr le branchement.

L'invention a pour objet un procédé de branchement vertical d'une dérivation sur une conduite en charge au moyen d'un robinet de dérivation à tournant ou soupape, à axe de commande vertical du type comportant une entrée située en prolongement de l'axe de commande du robinet, une sortie latérale et un canal destiné à permettre le passage de l'outil de perçage de la conduite et à être obturé après ce perçage, ce canal étant coaxial à l'entrée du robinet, ledit procédé comportant les étapes suivantes :

- montage étanche du robinet sur la conduite, la sortie du robinet étant provisoirement obturée,

- montage d'un dispositif de perçage sur la partie supérieure du robinet et perçage de la conduite, des moyens étant prévus pour empêcher le fluide contenu dans la conduite de s'échapper le long de l'outil de perçage,

- enlèvement de l'outil de perçage tout en empêchant le fluide de s'écouler par le canal à l'aide de moyens auxiliaires d'étanchéité,

- mise en place de moyens définitifs d'obturation du canal et des accessoires permettant la commande du robinet. Selon ce procédé, lesdits moyens provisoires d'étanchéité sont disposés de façon à permettre la mise en place des moyens définitifs d'obturation sans que ceux-ci soient soumis à la pression du fluide de la conduite.

Selon un premier mode de réalisation du procédé de l'invention, l'étape d'obturation du canal à l'aide de moyens auxiliaires consiste, d'une part, en la mise en place provisoire sur un siège à la partie inférieure du canal d'une soupape d'obturation solidaire d'une tige de manoeuvre commandée de l'extérieur, qui traverse de façon étanche, le fond d'un chapeau obturant la sortie latérale du robinet, et se poursuit, d'autre part, par les étapes suivantes :

- obturation définitive par un bouchon de la partie supérieure du canal, cette opération s'effectuant à l'air libre, hors pression, après avoir démonté le dispositif de perçage,

- retrait de la soupape de l'enceinte du robinet jusqu'au fond du chapeau par l'intermédiaire de la tige de manoeuvre,

- fermeture du robinet de dérivation par action sur la partie supérieure de la partie tournante,

- démontage du chapeau d'obturation,

- raccordement de la conduite de dérivation sur la tubulure de sortie.

Selon un second mode de réalisation du procédé de l'invention, le procédé est caractérisé par la mise en place automatique de moyens d'obturation définitifs, après dégagement de l'outil de perçage, par l'ouverture de la purge du dispositif de perçage et par l'intermédiaire du fluide qui s'échappe de la purge après avoir circulé dans l'enceinte

4

du robinet et traversé le canal.

L'invention a également pour objet un dispositif conçu spécialement pour la mise en oeuvre du procédé de branchement vertical d'une dérivation sur une conduite en charge au moyen d'un robinet de dérivation à axe de commande vertical du type tournant ou à soupape comportant d'une part, une tubulure d'entrée fixée de façon étanche sur la conduite, une tubulure de sortie latérale, un prolongement supérieur recevant de façon étanche un dispositif de perçage et, d'autre part, un canal situé à la partie supérieure de la partie tournante du robinet et destiné à être obturé, débouchant à la partie supérieure du robinet pour permettre le passage de l'outil de perçage de la conduite, ce dispositif comporte des moyens d'obturation de la partie inférieure du canal à l'intérieur du robinet, ces moyens sont situés dans l'enceinte sous pression après perçage de la conduite et ils sont constitués d'un siège situé à la partie inférieure du canal et d'une soupape d'obturation.

Selon une première réalisation de l'invention, la soupape est solidaire d'une tige de manoeuvre qui traverse de façon étanche, de préférence par un système à rotule, un chapeau d'obturation provisoire de la sortie latérale du robinet pour pouvoir être manoeuvrée de l'extérieur de la position inactive d'obturation à la position active d'obturation de la partie inférieure du canal.

Selon une deuxième réalisation de l'invention, la partie inférieure du canal comportant un siège destiné à la soupape d'obturation définitive du canal se prolonge par une chambre munie de moyens d'emprisonnement de la soupape.

L'invention sera mieux expliquée à l'aide de la description et des dessins annexés dans lesquels :

- la figure 1 représente un branchement au moyen d'un robinet de dérivation à tournant du type à boisseau conique, équipé du chapeau d'obturation de la sortie selon l'invention,

- la figure 2 représente une variante au moyen d'un robinet de dérivation à soupape du type pointeau,

5

- la figure 3 représente un robinet de dérivation à tournant du type à boisseau conique selon une autre disposition de l'invention,

- la figure 4 représente un robinet de dérivation à soupape du type à pointeau selon une autre disposition de l'invention.

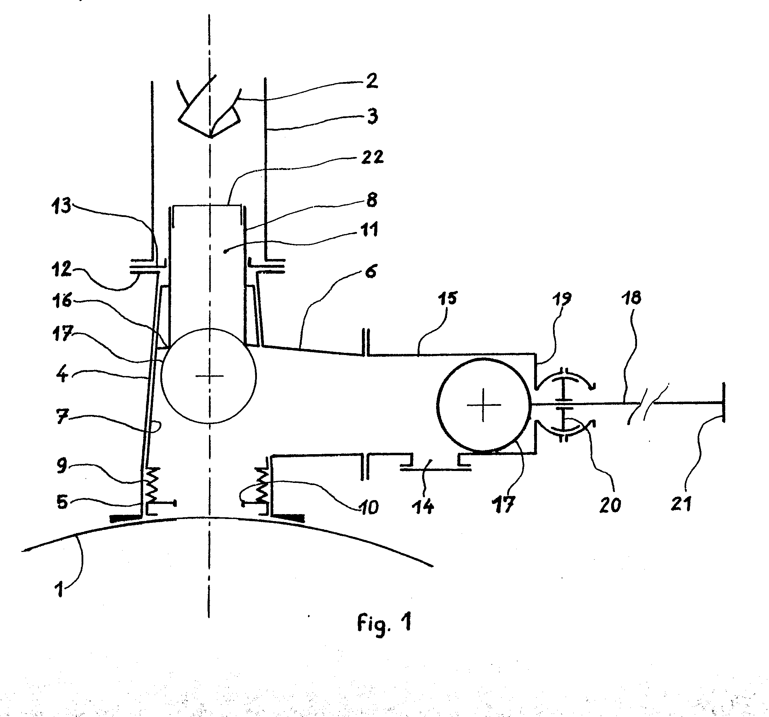

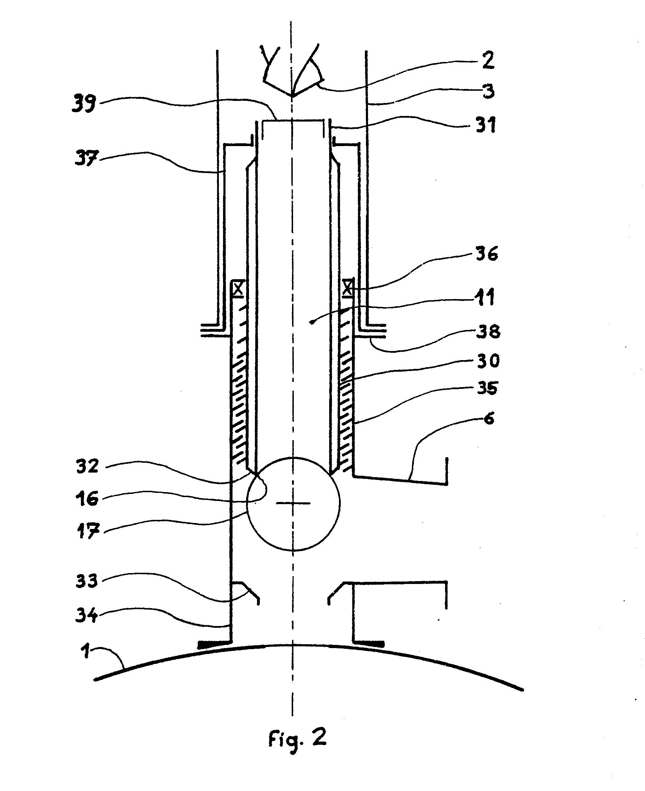

Selon les figures 1 et 2, le branchement est effectué sur une conduite 1 selon un axe vertical. La conduite 1 est percée au moyen d'un outil de perçage, généralement un foret 2 actionné de l'extérieur de la cloche étanche d'un dispositif de perçage 3 partiellement représenté. La figure 1 représente un branchement effectué au moyen d'un robinet de dérivation à tournant à axe vertical du type à boisseau conique 4, dont la grande base est située à la partie inférieure et la petite base à la partie supérieure du robinet. Ce robinet comporte une tubulure d'entrée 5 montée de façon étanche à la partie supérieure de la conduite 1 au moyen d'un collier non représenté ou de tout autre moyen ; il comporte une tubulure de sortie 6 latérale en communication avec l'entrée du robinet par l'intermédiaire de la partie tournante constituée par la clé. Cette clé 7 tourne selon un axe vertical dans le boisseau 4 au moyen d'un dispositif de commande non représenté qui s'adapte sur la partie 8 située à la partie supérieure de la clé 7. La section extérieure de cette partie - 8 peut être carrée. L'étanchéité conique entre la clé 7 et le boisseau 4 est maintenue par un ressort 9 prenant appui sur un canon de perçage 10 disposé à la partie inférieure de la tubulure d'entrée 5, au-dessus de la conduite 1. La clé 7 comporte, à travers toute sa partie supérieure un canal 11 qui permet le passage du foret 2 pour aller du dispositif de perçage 3 à la partie supérieure de la conduite 1 en traversant le robinet. Le dispositif de perçage 3 est monté de façon étanche sur la partie supérieure 12 du robinet. Le foret 2 est actionné de l'extérieur en translation et en rotation par un système de commande à guidage étanche non représenté. Le dispositif de perçage 3 comporte également des moyens de purge de l'enceinte constituée par le robinet et la partie interne dudit dispositif de perçage.

La robinet est monté sur la conduite 1 avec sa clé 7 en position ouverte, c'est-à-dire mettant l'entrée du robinet en communication avec la sortie. Un système de sécurité 13 est prévu pour prévenir toute tentative de rotation de la partie tournante 7 lors de l'opération de perçage actionné par le foret par l'intermédiaire de copeaux venant entre le foret et la clé. Ce système de sécurité provisoire 13 prend appui sur la partie supérieure 8 de la clé 7 qui peut avoir une section extérieure carrée et il est solidaire du prolongement supérieur du robinet. Les copeaux sont également évacués par une purge 14 prévue sur le chapeau 15 d'obturation de la tubulure 6 de sortie du robinet.

Ce chapeau 15 comporte une partie des moyens qui, en association avec l'autre partie située dans le robinet, permettent après perçage de la conduite et retrait de l'outil dans la partie supérieure du canal 11 au delà de la surface délimitée par le siège 16 et la soupape 17, l'obturation de la partie inférieure du canal 11. Dans le robinet, la partie inférieure du canal 11 comporte un siège 16 situé à l'intérieur de la clé 7. Ce siège 16 est destiné à recevoir une soupape 17 située, en position d'attente pour obturation dans le fond du chapeau 15. La soupape 17 est solidaire d'une tige de manoeuvre 18 qui traverse le fond 19 du chapeau 15 en étant guidée de façon étanche au moyen d'un système classique à rotule 20. La poignée 21 de cette tige de manoeuvre 18 permet de manipuler, de l'extérieur, la soupape 17 et de l'amener, après perçage et retrait du foret 2, jusqu'au siège 16 du canal 11 en traversant la tubulure de sortie 6 et la clé 7 par son ouverture de mise en communication entre l'entrée et la sortie. Le système à rotule peut, dans certains cas, faible pression notamment, être remplacé par un dispositif plus simple, par exemple un joint permettant le coulissement de la tige 18 et ayant une souplesse suffisante pour permettre des mouvements angulaires suffisants de celle-ci. On peut aussi avoir un joint coulissant rigide, la tige 18 étant alors conçue avec une souplesse suffisante. La soupape 17 se présente sous la forme d'une sphère, pleine ou creuse,

7

métallique ou plastique. La purge du dispositif de perçage 3 sert de moyen de mise en position active d'obturation de la soupape 17 avant le démontage du dispositif de perçage 3, en soumettant la soupape à la pression du fluide véhiculé par la conduite 1 ; elle sert également, cette purge, de moyen de contrôle de l'étanchéité provisoire avant le démontage du dispositif de perçage 3.

Après le démontage du dispositif de perçage, la partie supérieure du canal 11, qui est à l'air libre, hors pression, est obturée au moyen d'un bouchon 22, vissé par exemple dans la partie supérieure du canal 11. Pour faciliter le désengagement de la soupape 17 du siège 16, le bouchon 22 pourra avoir une longueur telle qu'il obture toute la longueur du canal jusqu'au droit du siège 16. Le canal 11 étant bouché, la soupape 17 est dégagée de l'intérieur du robinet et ramenée en position inactive dans le chapeau 15 au moyen de la tige de manoeuvre 18. La clé 7 est alors tournée d'un quart de tour pour isoler l'entrée du robinet de la sortie et permettre le démontage du chapeau 15 de la tubulure de sortie 6. Le branchement sur la conduite est alors terminé, il reste à effectuer le raccordement de la conduite de dérivation sur la tubulure de sortie 6 du robinet de dérivation...

La figure 2 représente une variante de branchement sur une conduite en charge par l'utilisation d'un robinet de dérivation à soupape du type à pointeau à axe de manoeuvre vertical. Les repères de la figure 1 ont été conservés pour les éléments identiques de l'invention. Ce robinet comporte un pointeau 30 qui constitue la partie tournante actionnée à sa partie supérieure 31 au moyen d'un dispositif de commande non représenté. Ce pointeau 30 se termine, à la partie basse, dans l'enceinte du robinet, par un cône 32 qui vient en position active d'obturation du robinet, sur le siège 33 disposé dans le robinet, au-dessus de la tubulure d'entrée 34. Le siège 33 se prolonge dans sa partie basse pour former un canon de perçage. Le pointeau 30 tourne dans un fourreau fileté 35 comportant à sa partie supérieure des moyens d'étanchéité 36 associés à la partie externe du pointeau 30. Le pointeau 30 est traversé par un canal 11 qui s'étend de sa partie externe supérieure jusqu'au cône 32 situé à sa partie inférieure, dans l'enceinte même du robinet. Le raccordement du cône 32 sur le canal 11 constitue un siège 16 destiné à recevoir la soupape 17 d'obturation provisoire. La soupape 17 est maintenue en position inactive d'obturation dans le chapeau 15 qui vient s'adapter sur la tubulure de sortie 6 du robinet à pointeau, de la même façon que dans le cas du robinet représenté figure 1. Le robinet, figure 2, est monté sur la conduite 1 en position ouverte maximum, c'est-à-dire que l'entrée est mise en communication avec la sortie. Pour prévenir un déplacement intempestif du pointeau lors du passage du foret 2, un dispositif provisoire de blocage de sécurité 37 est interposé entre le prolongement supérieur fixe 38 du robinet et la partie supérieure 31 du pointeau 30 qui peut avoir une section extérieure carrée.

Le dispositif de perçage 3 monté sur le prolongement supérieur 38 du robinet est identique à celui décrit pour la figure 1,il est également équipé d'une purge non représentée. Après l'opération de perçage proprement dite de la conduite 1, et dégagement du foret 2 dans la partie supérieure du canal 11 au delà de la surface délimitée par le siège 16 et la soupape 17, la soupape 17 est placée en position active d'obturation sur le siège 16 isolant l'enceinte sous pression et permettant ainsi le démontage du dispositif de perçage 3. La partie supérieure du canal 11, est obturée par un bouchon 39, vissé par exemple, dans le canal. De même que dans le cas précédent, figure 1, le bouchon 39 pourra s'étendre sur toute la longueur du canal 11 et dégager la soupape 17 du siège 16. La soupape 17 est ensuite dégagée jusque dans le chapeau 15 pour pouvoir fermer le robinet à pointeau et isoler la sortie de l'entrée du robinet avant de démonter le chapeau 15 et de raccorder la dérivation sur cette tubulure de sortie 6.

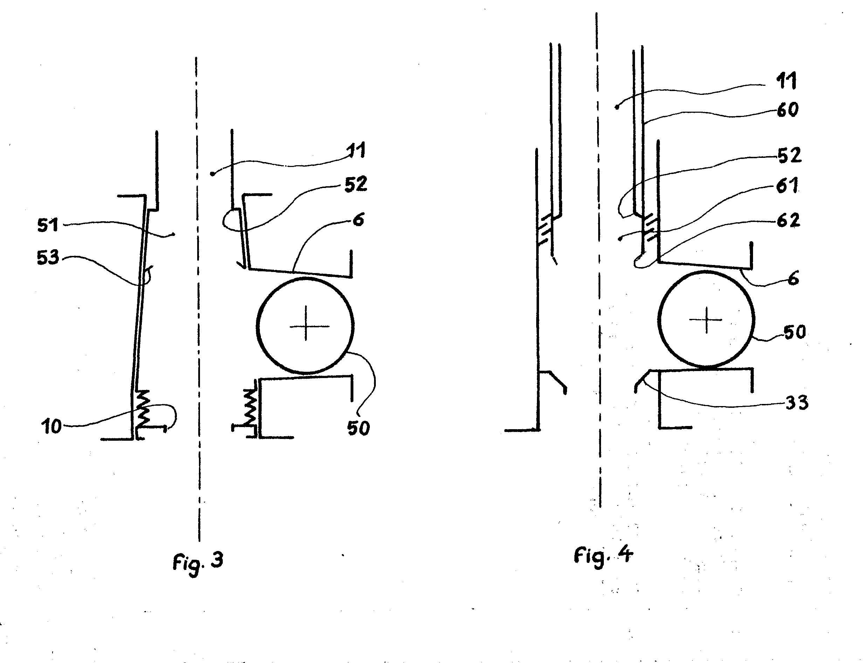

Selon une autre disposition de l'invention, figures 3 et 4, il est possible d'obtenir au moyen de la soupape 50 précédemment référencée 17 figures 1 et 2, une obturation définitive de la partie inférieure, interne au robinet, du canal 11. Cette disposition permet de s'affranchir de l'opération de pose d'un bouchon d'obturation à la partie supérieure, externe au robinet, du canal 11. Selon cette disposition, appliquée à un robinet à tournant du type à boisseau conique, figure 3, le canal 11 de passage du foret se prolonge à sa partie inférieure par une chambre 51 d'emprisonnement de la soupape 50. La partie débouchante du canal 11 dans cette chambre 51 forme un siège 52 coopérant avec la soupape 50 qui est maintenue en position active d'obturation d'une part, au moyen de la pression du fluide qui s'exerce dans l'enceinte du robinet et, d'autre part, par une lèvre souple 53 disposée à la partie inférieure de la chambre 51. La soupape 50 franchit cette lèvre souple 53 au moyen de la pression du fluide lorsqu'elle vient se positionner sur le siège 52. Le déplacement de la soupape 50 de sa position inactive d'obturation située dans la tubulure de sortie 6 à sa position active d'obturation, prisonnière dans la chambre 51, s'effectue automatiquement par le fluide sous pression qui circule dans l'enceinte du robinet et qui s'échappe par la purge du dispositif de perçage traversant le canal 11.

Pour faciliter le dégagement de la soupape 50 de sa position inactive d'obturation, la tubulure de sortie 6 est en forme de tronc de cône avec une pente dirigée vers la chambre 51 d'emprisonnement de la soupape, la partie étroite du tronc de cône se situant à l'extrémité externe de la tubulure 6. La soupape 50 est maintenue en position inactive par le foret 2 ou un fourreau d'accompagnement du foret qui évite de blesser la soupape. La soupape 50 ne viendra en position d'obturation qu'après le dégagement du foret 2 du canal 11 et ouverture de la purge située à cet effet sur le dispositif de perçage 3.

Le robinet peut être pourvu de l'ensemble de ses moyens d'obturation avant d'être monté sur la conduite 1 ; la soupape 50 est maintenue dans l'enceinte du robinet par un chapeau non représenté qui obture la tubulure de sortie 6 et par le canon de perçage 10 dont le diamètre de l'orifice est inférieur au diamètre de la soupape 50.

La figure 4 représente une variante de cette disposition selon l'invention par l'utilisation d'un robinet à soupape du type à pointeau. Dans cette variante, le canal 11 qui traverse le poiteau 60 de part en part, se termine à la partie inférieure par une chambre 61 d'emprisonnement de la soupape 50. La partie inférieure du canal 11 constitue un siège 52 sur lequel prend appui la soupape 50 en position active d'obturation. La paroi latérale de la chambre se termine à son extrémité basse dans l'enceinte du robinet par une lèvre 62 qui emprisonne la soupape après son passage dans la chambre 61. Le diamètre intérieur de la lèvre 62 peut être légèrement inférieur au diamètre de la soupape 50 ; il peut aussi être égal, au moment du passage de la soupape, et être réduit par sertissage sur le siège normal 33 du pointeau. Dans cette disposition, la soupape 50 peut être introduite en force dans la chambre 61 lors de la fermeture du robinet, par la descente du pointeau 60 vers le siège 33, dans ce cas, la soupape 50 prisonnière de la chambre assure l'étanchéité sur le siège 33 et la fermeture de l'entrée du robinet de dérivation.

Dans ces deux dernières dispositions, la soupape 50 est véhiculée dans la chambre d'emprisonnement par le fluide qui circule dans l'enceinte du robinet et s'échappe par la purge du dispositif de perçage 3 en traversant le canal 11 ; cette opération peut éventuellement se faire avec l'aide d'une tige de manoeuvre comme dans le cas de la figure 1, et notamment si, pour des raisons constructives, la tubulure de sortie du robinet dans laquelle stationne la soupape en position inactive d'obturation, n'est pas réalisée avec une pente qui permet à la soupape de s'échapper plus facilement de sa position inactive d'obturation vers sa position active dans la chambre d'emprisonnement. La tige de manoeuvre de ce dispositif additionnel ne sert alors qu'à pousser la soupape jusqu'à l'entrée de la chambre d'emprisonnement.

Les formes et matières peuvent changer sans pour cela sortir du cadre de l'invention ; il en est de même de l'application du procédé et dispositif qui ne se limitent pas à l'adduction d'eau mais sont d'une utilisation plus large en utilisant les matériaux appropriés à tous types de fluide.

## REVENDICATIONS

1. Procédé de branchement vertical d'une dérivation sur une conduite en charge au moyen d'un robinet de dérivation à tournant ou soupape, à axe de commande vertical du type comportant une entrée située en prolongement de l'axe de commande du robinet, une sortie latérale et un canal (11) destiné à permettre le passage de l'outil de perçage de la conduite et à être obturé après ce perçage, ce canal étant coaxial à l'entrée du robinet, ledit procédé comportant les étapes suivantes :

   - montage étanche du robinet sur la conduite, la sortie du robinet étant provisoirement obturée,

   - montage d'un dispositif de perçage (3) sur la partie supérieure du robinet et perçage de la conduite, des moyens étant prévus pour empêcher le fluide contenu dans la conduite de s'échapper le long de l'outil de perçage,

   - enlèvement de l'outil de perçage tout en empêchant le fluide de s'écouler par le canal (11) à l'aide de moyens auxiliaires d'étanchéité,

   - mise en place de moyens définitifs d'obturation du canal (11) et des accessoires permettant la commande du robinet,

caractérisé en ce que lesdits moyens provisoires d'étanchéité sont disposés de façon à permettre la mise en place de moyens définitifs d'obturation sans que ceux-ci soient soumis à la pression du fluide de la conduite.

2. Procédé de branchement vertical d'une dérivation selon la revendication 1, caractérisé en ce que l'étape d'obturation du canal (11) à l'aide de moyens auxiliaires consiste d'une part, en la mise en place provisoire sur un siège (16) à la partie inférieure du canal (11) d'une soupape (17) d'obturation solidaire d'une tige de manoeuvre (18) commandée de l'extérieur qui traverse de façon étanche, le fond d'un chapeau (15) obturant la sortie latérale (6) du robinet, et se poursuit d'autre part, par les étapes suivantes :

   - obturation définitive par un bouchon (22) de la partie supérieure du canal (17), cette opération s'effectuant à l'air libre, hors pression, après avoir démonté le dispositif de perçage (3),

- retrait de la soupape (17) de l'enceinte du robinet jusqu'au fond du chapeau (15) par l'intermédiaire de la tige de
manoeuvre (18),

- fermeture du robinet de dérivation par action sur la partie supérieure de la partie tournante,

- démontage du chapeau d'obturation (15),

- raccordement de la conduite de dérivation sur la tubulure de sortie (6).

3. Procédé de branchement vertical d'une dérivation selon
la revendication 1, caractérisé en ce qu'il comporte la mise
en place automatique et définitive des moyens d'obturation auxiliaires, après dégagement de l'outil de perçage, par l'ouverture de la purge du dispositif de perçage à l'aide du fluide
qui s'échappe de la purge après avoir circulé dans l'enceinte
du robinet et traversé le canal.

4. Procédé de branchement vertical d'une dérivation selon la revendication 1, caractérisé en ce que les moyens d'obturation auxiliaires comprennent une soupape sphérique (50) qui vient se loger définitivement sur
un siège (52) dans une chambre située sous le canal (11), et en ce qu'on
procède ensuite aux opérations suivantes :

- démontage du dispositif de perçage (3)

- fermeture du robinet de dérivation par action sur la partie supérieure de la partie tournante,

- démontage du chapeau d'obturation de la tubulure (6) de sortie,

- raccordement de la conduite de dérivation sur la tubulure de sortie (6).

5. Dispositif de branchement vertical d'une dérivation
sur une conduite en charge au moyen d'un robinet de dérivation à axe de commande vertical à type à tournant ou à soupape comportant d'une part, une tubulure d'entrée fixée de
façon étanche sur la conduite, une tubulure de sortie latérale, un prolongement supérieur recevant de façon étanche
un dispositif de perçage et, d'autre part, un canal destiné
à être obturé, situé à la partie supérieure de la partie
tournante du robinet, permettant le passage de l'outil de
perçage de la conduite, ce dispositif étant caractérisé en ce
qu'il comporte des moyens d'obturation de la partie inférieure du canal (11) à l'intérieur du robinet, ces moyens étant situés dans l'enceinte mise sous pression après perçage de la conduite 1 et étant constitués d'une soupape (17) et d'un siège situé à la partie inférieure du canal (11) pour recevoir la soupape.

6. Dispositif de branchement vertical d'une dérivation selon la revendication 5, caractérisé en ce que la soupape (17) est solidaire d'une tige de manoeuvre (18) qui traverse, de façon étanche, le chapeau (15) d'obturation provisoire de la tubulure de sortie (6) du robinet, pour être manoeuvrée de l'extérieur de la position inactive d'obturation à la position active d'obturation provisoire sur le siège (16) de la partie inférieure du canal (11).

7. Dispositif selon la revendication 6, caractérisé en ce que la tige de manoeuvre (18) traverse le chapeau (15) par un système à rotule (20).

8. Dispositif de branchement vertical d'une dérivation selon la revendication 6 ou 7, caractérisé en ce que la partie supérieure du canal (11) est obturée de façon définitive par un bouchon qui s'étend sur toute la longueur du canal (11) jusqu'au siège de la partie inférieure de ce canal.

9. Dispositif de branchement vertical d'une dérivation selon la revendication 5, caractérisé en ce que la partie inférieure du canal (11) comporte un siège (52) destiné à la soupape (50) d'obturation définitive du canal (11) se prolonge par une chambre munie de moyens d'emprisonnement de la soupape (50).

10. Dispositif de branchement vertical d'une dérivation selon la revendication 9, caractérisé en ce que les moyens d'emprisonnement de la soupape sont constitués d'une lèvre déformable à la partie inférieure de la chambre d'emprisonnement de la soupape (50).

11. Dispositif de branchement vertical d'une dérivation selon l'une des revendications 5 à 10, caractérisé en ce que le robinet est maintenu en position ouverte pendant l'opération de perçage au moyen d'un dispositif provisoire de séucrité (13) solidaire d'une part du prolongement supérieur du robinet et prend appui sur la partie tournante du

0110784

15

du robinet.

12. Dispositif de branchement vertical d'une dérivation selon l'une des revendications 5 à 11 caractérisé en ce que la tubulure latérale de sortie (6) est obturée par un chapeau muni d'une purge.

Fig. 1

7097 FR

0110784

Fig. 2

Fig. 3

Fig. 4

0110784

7097 FR

**Office européen
des brevets**

**RAPPORT DE RECHERCHE EUROPEENNE**

EP 83 40 2274

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | GB-A-1 294 200 (HEPWORTH) <br> * Page 1, lignes 17-74; revendication 1; figures * | 1,2 | F 16 L 41/04 <br> F 16 L 47/00 |
| X | GB-A-1 226 001 (BAKELITE) <br> * Page 1, lignes 60-93; page 2, lignes 15-37; page 3, lignes 73-103; figures * | 1,2 | |
| A | PRODUCT ENGINEERING, vol. 34, 4 mars 1963, page 94, New York, US "Self-tapping valve" * En entier * | 1 | |

---

**DOMAINES TECHNIQUES RECHERCHES (Int. Cl. ³)**

F 16 L

Le présent rapport de recherche a été établi pour toutes les revendications

| Lieu de la recherche <br> LA HAYE | Date d'achèvement de la recherche <br> 03-02-1984 | Examinateur <br> SCHAEFFLER C.A.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82